# EUROPÄISCHE PATENTSCHRIFT

(11) **EP 3 655 190 B1**
(45) Veröffentlichungstag und Bekanntmachung des Hinweises auf die Patenterteilung: **06.04.2022**
(21) Anmeldenummer: 18743463.4
(22) Anmeldetag: 18.07.2018
(51) Int. Cl.: B23K 26/03, B23K 26/08, B23K 26/082, G02B 26/10

(54) **VERFAHREN UND LASERSCANNVORRICHTUNG ZUR BEARBEITUNG EINER OBERFLÄCHE UND LASERSCANNVORRICHTUNG MIT LASERSCANNER UND EINER BEWEGUNGSMECHANIK**
METHOD AND LASER SCANNING DEVICE FOR MACHINING A SURFACE AND LASER SCANNING DEVICE HAVING A LASER SCANNER AND HAVING A MOVEMENT MECHANISM
PROCÉDÉ ET DISPOSITIF DE BALAYAGE LASER POUR L'USINAGE D'UNE SURFACE ET DISPOSITIF DE BALAYAGE LASER DOTÉ D'UN SCANNER LASER ET D'UN MÉCANISME DE DÉPLACEMENT

(30) Priorität: 18.07.2017 DE 102017116140
(43) Veröffentlichungstag der Anmeldung: 27.05.2020
(73) Patentinhaber: Fraunhofer-Gesellschaft zur Förderung der angewandten Forschung e.V., 80686 München (DE)
(72) Erfinder: FLEMMER, John, 52064 Aachen (DE)
(74) Vertreter: Pfenning, Meinig & Partner mbB
(86) Internationale Anmeldenummer: PCT/EP2018/069520
(87) Internationale Veröffentlichungsnummer: WO 2019/016271

(56) Entgegenhaltungen:
- DE-A1-102014 208 371
- US-A1- 2002 033 387
- US-A1- 2006 102 601
- US-A1- 2011 128 522

## Beschreibung

Die Erfindung betrifft ein Verfahren und eine Vorrichtung zur Bearbeitung einer Oberfläche mittels eines Laserscanners, wobei die Oberfläche mittels einer Bewegungsmechanik während des Scanvorgangs bewegt wird. Dabei gibt die Bewegungsmechanik ein Positionssignal an den Laserscanner aus, über welches auf die aktuelle Position und/oder Orientierung der Oberfläche gegenüber dem Laserscanner geschlossen werden kann. Der Laserscanner wird dann in Abhängigkeit vom Positionssignal gesteuert. Das Positionssignal ist dabei ein einzelnes Signal, das den Fortschritt eines Verlaufs anzeigt, entlang dem die Oberfläche gegenüber dem Laserscanner bewegt wird.

Beim Laserpolieren von Metallen wie auch bei vielen anderen Laserverfahren (z.B. Laserbeschriften/Lasermarkieren, Laserstrukturieren, Laserreinigen) wird zur Bearbeitung eine Kombination aus mechanischen Achsen und Laserscanner verwendet. Während der Laserscanner den Laserstrahl sehr schnell über die Werkstückoberfläche führen kann, ist sein Scanfeld von der Größe stark limitiert. Durch die Kombination mit einer oder mehreren mechanischen Linearachsen können deutlich größere Flächen bearbeitet werden.

Werden mechanische Achsen und Laserscanner nicht simultan verwendet - also wird das Werkstück zuerst mittels mechanischen Achsen positioniert und anschließend mittels Laserscanner bearbeitet nachdem die Achsen das Werkstück positioniert haben - müssen für die Bearbeitung von Flächen, die über das Bearbeitungsfeld des Laserscanner hinaus gehen, diese in mehrere Teilflächen aufgeteilt werden. In diesem Fall wird das Werkstück für jede Teilfläche neu positioniert.

Auch die Bearbeitung von Freiformflächen erfordert oftmals eine Aufteilung der Gesamtfläche in mehrere Teilflächen, da nicht nur das Scanfeld eine limitierte Größe hat sondern der Einstrahlwinkel des Laserstrahls im Bezug zur Oberflächennormalen möglichst klein gehalten werden sollte. Hierzu ist eine Neupositionierung/Neuorientierung des Werkstücks für jede Teilfläche notwendig. Dadurch sind zusätzlich Rotationsachsen notwendig.

Die Aufteilung in Teilflächen führt im Allgemeinen zu visuellen oder funktionalen Störungen im Überlappungsbereich. Beim Laserpolieren kommt es in diesen Bereichen zu Ansatzkanten in Form eines Materialaufwurfs. Beim Lasermarkieren entsteht durch diese Kachelung kein geschlossenes Gesamtbild. Insbesondere wenn mechanische Rotationsachsen zur Positionierung des Werkstücks verwendet werden, ist eine sehr hohe Genauigkeit des mechanischen Systems erforderlich, um zwei Teilflächen exakt aneinander zu legen. Außerdem erhöht sich die Nebenzeit des Prozesses durch die wiederholte Neupositionierung, bei der der Laser ausgeschaltet bleibt und der Prozess unterbrochen wird. Diese Nebenzeit kann insbesondere für das Laserstrukturieren aufgrund der kleinen Teilflächen bei bis zu 33% der Gesamtbearbeitungszeit liegen.

Eine Lösung um große oder/und gekrümmte Flächen durchgängig zu bearbeiten ist die simultane Bewegung von Laserscanner und mechanischen Achsen. Um die simultane Bearbeitung dieser beiden zunächst unabhängigen Systeme zu realisieren, muss eine Synchronisierung untereinander realisiert werden, damit eine fehlerfreie Bearbeitung gewährleistet ist.

Der Einsatz einer Steuerung für alle Achsen ist technisch sehr aufwendig, da der Interpolationstakt des Laserscanners aufgrund der hohen Dynamik deutlich kleiner ist als der der Steuerung für die mechanischen Achsen.

Aufgabe der vorliegenden Erfindung ist es, ein Verfahren zur Bearbeitung einer Oberfläche mittels eines Laserscanners anzugeben, bei dem die Oberfläche gegenüber dem Laserscanner bewegt wird und mit geringem Aufwand eine gute Synchronisierung gewährleistet werden kann. Ausgabe ist es weiterhin, eine entsprechende Laserscanvorrichtung anzugeben.

Die Aufgabe wird gelöst durch das Verfahren zur Bearbeitung einer Oberfläche nach Anspruch 1 und die Laserscanvorrichtung nach Anspruch 10. Die abhängigen Ansprüche geben vorteilhafte Weiterbildungen des erfindungsgemäßen Verfahrens an.

Erfindungsgemäß wird ein Verfahren zur Bearbeitung einer Oberfläche angegeben. Es wird dabei ein Laserstrahl mittels eines Laserscanners über die Oberfläche geführt. Der Laserstrahl kann dann auf die Oberfläche einwirken und diese bearbeiten. Unter einem Laserscanner kann hier eine Vorrichtung verstanden werden, die die Strahlrichtung eines Lasers ablenken kann und so durch Ablenken des Laserstrahls an unterschiedliche Positionen auf einer Oberfläche lenken kann. Beispielsweise kann der Laserscanner eine Laserquelle aufweisen, deren Laserstrahl über bewegliche Spiegel geführt wird. Durch Bewegung der Spiegel kann dann die Richtung eingestellt werden, in der der Laserstrahl aus dem Laserscanner austritt.

Erfindungsgemäß wird die Oberfläche mittels einer Bewegungsmechanik gegenüber dem Laserscanner entlang eines vorgegebenen Verlaufs verschoben und/oder gedreht. Durch die Bewegungsmechanik können also eine Position und/oder Orientierung der Oberfläche gegenüber dem Laserscanner eingestellt und verändert werden. Der Vorgang des Veränderns der Position und/oder der Orientierung der Oberfläche gegenüber dem Laserscanner soll hier als Repositionierungsvorgang bezeichnet werden. Bewegungsmechaniken zur Verschiebung und/oder Drehung eines Werkstücks, dessen Oberfläche zu bearbeiten ist, können auf unterschiedliche Weise ausgestaltet sein. Beispielsweise beim Laserpolieren und beim Laserstrukturieren kann eine 5-Achs-Kinematik, beispielsweise mit drei Linearachsen und zwei Rotationsachsen, mit einem 3D-Laserscanner verknüpft werden. Die Oberfläche, die mittels des erfindungsgemäßen Verfahrens bearbeitet wird, kann beispielsweise die Oberfläche eines Werkstücks sein, das mit der Bewegungsmechanik bewegt wird.

Das Verschieben und/oder Drehen der Oberfläche gegenüber dem Laserscanner mittels der Bewegungsmechanik erfolgt entlang eines vorgegebenen Verlaufs. Unter einem Verlauf wird dabei ein Pfad im durch die Translations- und Rotationskoordinaten aufgespannten Raum verstanden, in dem die Bewegung erfolgt. Im allgemeinsten Fall wäre der Verlauf also beispielsweise ein Pfad im durch eine X-, Y- und Z-Komponente sowie zwei Winkel aufgespannten Raum. Jeder Punkt des Verlaufs entspricht also einem eindeutigen Satz von Koordinaten, also eindeutigen Werten der Translationskoordinaten und der Rotationskoordinaten. Der Verlauf ist also eine Linie in dem durch diese Koordinaten aufgespannten Raum. Die Steuerung der Maschine oder deren kinematische Transformation kann dadurch aus einem einzelnen Parameter, der den Fortschritt des Verlaufs anzeigt, die Translationskoordinaten und die Rotationskoordinaten bestimmen. Hierbei können optional auch andere Interpolationsverfahren zum Einsatz kommen. Zum Beispiel kann die Richtung über zwei Richtungsvektoren vorgegeben werden und die Steuerung die Richtung in der Ebene interpolieren, die durch die beiden Vektoren aufgespannt wird. Die Interpolation ist hier vorteilhafterweise bekannt.

Ist beispielsweise die Bewegungsmechanik ein X,Y-Tisch, der eine Translationsbewegung aber keine Drehung ausführt, so wäre der Verlauf eine Linie oder ein Pfad in der X,Y-Ebene. Ist die Handhabungsvorrichtung beispielsweise der Arm eines Roboters, der eine Bewegung der Oberfläche in X-, Y- und Z-Richtung ermöglicht und darüber hinaus eine Drehung der Oberfläche um zwei senkrecht zueinander stehende Drehachsen ermöglicht, so wäre der Verlauf eine Linie im durch die X-, Y- und Z-Komponente sowie die beiden Drehwinkel aufgespannten Raum.

Erfindungsgemäß überträgt die Bewegungsmechanik ein Positionssignal an den Laserscanner, wobei das Positionssignal eine aktuelle Position und/oder Orientierung der Oberfläche gegenüber dem Laserscanner anzeigt. Dabei ist das Positionssignal erfindungsgemäß ein einzelnes Signal, aus dem auf den Fortschritt des Verlaufs geschlossen werden kann, entlang dem die Oberfläche gegenüber dem Laserscanner verschoben und/oder gedreht wird. Da der Verlauf eine Linie im entsprechenden Koordinatenraum ist, ist das Positionssignal, das den Fortschritt dieses Verlaufs anzeigt, ein Skalar oder eine eindimensionale Größe. Weitere Informationen brauchen nicht von der Bewegungsmechanik an den Laserscanner zu übertragen werden, da der Verlauf einen eindeutigen Zusammenhang zwischen dem durch das Positionssignal angegebenen Fortschritt des Verlaufs und jenen die Position und/oder Orientierung der Oberfläche beschreibenden Koordinaten herstellt. Jeder Punkt auf der Verlaufslinie ist einem Satz von Koordinaten eindeutig zugeordnet. Das Positionssignal kann daher einfach eine einzelne Zahl sein, die den Fortschritt entlang des Verlaufs angibt.

In einer vorteilhaften Ausgestaltung der Erfindung kann das Positionssignal ein einzelnes Encodersignal sein, das Inkremente des Verlaufs zählt, entlang denen die Oberfläche mittels der Bewegungsmechanik verschoben und/oder gedreht wird.

Encodersignale sind aus dem Bereich der Werkzeugmaschinen bekannt. Im einfachsten Fall existiert dort für jede Achse ein Encodersignal, das angibt, wie weit sich die entsprechende Achse bewegt hat. Das Encodersignal kann in diesem Fall direkt das Motorsignal sein, so dass eine Umdrehung des Motors z.B. ein Peak im Encodersignal bedeutet. In der vorliegenden Erfindung soll, sofern die Bewegung mittels mehr als einer Achse der Bewegungsmechanik erfolgt, nicht das Encodersignal der einzelnen Achsen verwendet werden, sondern es wird vorteilhafterweise ein simuliertes Encodersignal erzeugt, das nicht den Bewegungsfortschritt einzelner Achsen angibt, sondern den Bewegungsfortschritt entlang des Verlaufs. Dieses Encodersignal sollte dann synchron zu dem Verlauf sein, den die Bewegungsmechanik fährt. Vorteilhafterweise kann das Encodersignal ein Rechtecksignal sein, so dass es die Abzählung von Inkrementen ermöglicht.

Viele Bewegungsmechaniken wie beispielsweise Werkzeugmaschinen haben häufig eine kinematische Transformation, die es erlaubt, eine Linie auf dem Werkstück vorzugeben. Die Werkzeugmaschine kann dann das Werkstück so bewegen, dass ein Werkzeug diese Linie auf der Oberfläche abfährt. Die kinematische Transformation berechnet die erforderliche Verstellung ihrer Achsen aus dem vorgegebenen Weg. Diese kinematische Transformation kann für die Erfindung vorteilhaft verwendet werden. Sie ermöglicht die Berechnung eines einzelnen Encodersignals auf Basis des Fortschrittes entlang der Linie. Vorteilhafterweise kann dieses Encodersignal beispielsweise als sechste Achse ausgegeben werden und dem Laserscanner zugeführt werden.

In einer vorteilhaften Ausgestaltung der Erfindung kann der Verlauf durch eine Mehrzahl von Trigger-Punkten unterteilt werden. Die Trigger-Punkte können beispielsweise einfach als bestimmte vorgegebene Werte des Positionssignals definiert werden. Ist also beispielsweise das Positionssignal ein Encodersignal, das Inkremente des Verlaufs zählt, so können als Trigger-Punkte bestimmte Inkrementanzahlen definiert werden. Diese beschreiben dann eindeutig bestimmte Punkte auf dem Verlauf, nämlich die Trigger-Punkte.

Wird nun die Oberfläche entlang des Verlaufs bewegt, so passiert sie die Trigger-Punkte nacheinander. Während die Oberfläche gegenüber dem Laserscanner durch die Bewegungsmechanik zwischen zweien der Trigger-Punkte entlang des Verlaufs bewegt wird, wird der Laserstrahl über jeweils einen Teilbereich der Oberfläche geführt. Vorteilhafterweise pausiert der Laserscanner die Bearbeitung, bis das Positionssignal anzeigt, dass die Oberfläche einen Fortgeschritteneren der zwei aktuellen Trigger-Punkte erreicht hat. Dadurch kann gewährleistet werden, dass sich der Laserscanner relativ zum Werkstück auf der vorgegebenen Sollposition und -orientierung befindet. Das bedeutet also, dass zunächst ausgehend von einem früheren Trigger-Punkt die Oberfläche entlang des Verlaufs bewegt wird und gleichzeitig der Laserscanner einen entsprechenden Teilbereich der Oberfläche bearbeitet. Hat der Laserscanner die Bearbeitung dieses Teilbereichs beendet, so pausiert er die Bearbeitung und wartet darauf, dass das Positionssignal anzeigt, dass die Oberfläche den nächsten Trigger-Punkt erreicht hat. Bei Erreichen dieses Fortgeschritteneren der zwei Trigger-Punkte setzt der Laser die Bearbeitung in einen nächsten Teilbereich der Oberfläche fort. Dieses Vorgehen kann für alle benachbarten Trigger-Punkte wiederholt werden, bis der Verlauf an seinem Ende anlangt.

In einer vorteilhaften Ausgestaltung der Erfindung kann der Verlauf von Vornherein mit einem Anfang des Verlaufs und einem Ende des Verlaufs vorgegeben werden. Der Anfang und das Ende des Verlaufs entsprechen hierbei also jeweils einem Tupel von Koordinatenwerten. Es kann dann der Verlauf in eine vorgegebene Anzahl von Inkrementen unterteilt werden. Einige der Inkremente können dann als Trigger-Punkte definiert werden. Es werden außerdem für jeden Abschnitt des Verlaufs zwischen zwei zeitlich Benachbarten der Trigger-Punkte jeweils Teilwege des Laserstrahls definiert, die der Laserstrahl abfährt, während die Oberfläche zwischen diesen zeitlich Benachbarten der Trigger-Punkte bewegt wird. Die Teilwege können also den oben genannten Teilbereichen der Oberfläche entsprechen.

Vorzugsweise führt dann der Laserscanner den Laserstrahl mit einer solchen Geschwindigkeit über die Oberfläche, dass der Laserstrahl den jeweiligen Teilweg vollständig abgefahren hat, bevor die Oberfläche den Fortgeschritteneren der beiden aktuell zeitlich benachbarten Trigger-Punkte erreicht hat. Der Laserscanner kann die Bearbeitung pausieren, wenn dieser das Ende des entsprechenden Teilweges erreicht hat. Bevorzugterweise wird der Laserstrahl ausgeschaltet, wenn er das Ende eines Teilwegs oder Teilbereichs erreich hat und wieder eingeschaltet, wenn die Oberfläche den jeweils Fortgeschritteneren der Trigger-Punkte erreicht hat. Es wird vorteilhafterweise der Scannvorgang fortgesetzt, wenn die Oberfläche gegenüber dem Laserscanner den Fortgeschitteneren der Trigger-Punkte, die den entsprechenden Abschnitt des Verlaufs begrenzen, erreicht hat. Für den Laserscanner kann hierbei das auslösende Ereignis sein, dass das Positionssignal jenes Inkrement erreicht, bei dem der Fortgeschrittenere der Trigger-Punkte definiert worden ist.

In einer vorteilhaften Ausgestaltung der Erfindung kann der Laserscanner den Laserstrahl so führen, dass dieser die Bewegung der Bewegungsmechanik jeweils ausgleicht, so dass der Laserstrahl einen vorgegebenen Weg auf der Oberfläche abfährt. Werden zwischen zwei Trigger-Punkten die Oberfläche und der Laserstrahl gleichzeitig bewegt, so kann also der Laserstrahl so geführt werden, dass sich durch das Verschieben der Oberfläche keine Abweichung vom Sollweg ergibt, den der Laserstrahl abfahren soll. Da die Mechanik die Oberfläche in Richtung des Verlaufs bewegt und/oder dreht, erfolgt vorteilhafterweise der Ausgleich in Richtung des Verlaufs. Ein Betrag des Ausgleichs kann dann dadurch bestimmt werden, dass die Position der Bewegungsmechanik bzw. der Oberfläche gegenüber dem Laserscanner zwischen zweien der Trigger-Punkte interpoliert wird und der Betrag des Ausgleichs zu einem gegebenen Zeitpunkt jener Weg ist, den die Oberfläche gegenüber dem Laserscanner gemäß der Interpolation ausgehend vom früheren der zwei Trigger-Punkte zu diesem Zeitpunkt zurückgelegt hat.

Der Verlauf der Position des Laserscanners gegenüber der Oberfläche kann vorteilhaft eine Linie parallel zur Oberfläche beschreiben.

Bevorzugterweise ist die Bewegung der Bewegungsmechanik gegenüber dem Laserscanner eine relativ einfache Bewegung, während der Laserscanner komplexe Bewegungen ausführt. Insbesondere ist es vorteilhaft, wenn die Bewegungsmechanik die Oberfläche gegenüber dem Laserscanner in einer Hauptbearbeitungsrichtung bewegt, die dem Verlauf folgt, während der Laserscanner schnelle Scanbewegungen macht. Die Hauptbearbeitungsrichtung kann die längste jener Richtungen sein, in der die Oberfläche zur vollständigen Bearbeitung bewegt wird.

Alles vorstehend zum Verfahren Beschriebene gilt für die Laserscanvorrichtung analog.

Die Bewegungsmechanik bewegt die Oberfläche gegenüber dem Laserscanner bevorzugterweise kontinuierlich. Es kann jedoch in einigen Situationen erforderlich sein, dass die Oberfläche gegenüber dem Laserscanner in mehreren getrennten Bewegungsvorgängen verschoben und/oder gedreht wird. In diesem Falle kann vorteilhafterweise in jedem Repositionierungsvorgang die Oberfläche zumindest in einer positiven Beschleunigungsphase, in der eine Geschwindigkeit der Oberfläche relativ zum Laserscanner erhöht wird, und einer nach der positiven Beschleunigungsphase ausgeführten negativen Beschleunigungsphase, in der die Geschwindigkeit der Oberfläche relativ zum Laserscanner auf Null reduziert wird, bewegt werden. Dabei kann vorteilhafterweise, wenn in der negativen Beschleunigungsphase die Geschwindigkeit Null erreicht wird, bevor der Laserstrahl das von ihm in diesem Repositionierungsvorgang zu scannenden Weg erreicht hat, die Geschwindigkeitserhöhung in der positiven Beschleunigungsphase des darauffolgenden Repositionierungsvorgangs zu einem Zeitpunkt beginnen, zu dem der Laserstrahl den Endpunkt des Weges erreicht hat, den er während des früheren Repositionierungsvorgangs abfahren soll. Wird in der negativen Beschleunigungsphase die Geschwindigkeit Null erreicht, nachdem der Laserstrahl diese Endposition erreicht hat, kann die Geschwindigkeitserhöhung in der positiven Beschleunigungsphase des darauffolgenden Repositionierungsvorgangs unmittelbar nach dem Erreichen der Geschwindigkeit Null beginnen.

Insbesondere kann die Bewegung wie in der DE 10 2014 208 371 A1 (Basis des Oberbegriffes der Ansprüche 1 und 10) in einer Mehrzahl von Repositionierungsvorgängen ausgeführt werden.

Des Weiteren ist aus US 2006/0102601 A1 eine Vorrichtung zur Bearbeitung eines Werkstücks bekannt, die das Werkstück relativ zu einem ortsfesten Laser bewegt und welche darüber hinaus über ein System zur Erfassung der Topographie des Werkstücks aufweist.

Im Folgenden soll die Erfindung anhand einiger Figuren beispielhaft erläutert werden. Gleiche Bezugszeichen entsprechen dabei gleichen oder entsprechenden Merkmalen. Es zeigt
Figur 1 beispielhaft einen Weg, den ein Laserstrahl auf einer Oberfläche bearbeiten kann, und
Figur 2 einen Zeitverlauf des Scanvorgangs,

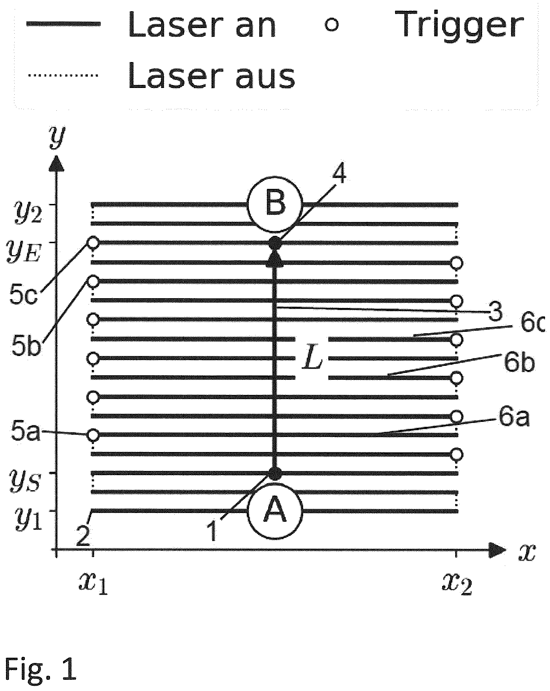

Figur 1 zeigt einen Weg, den ein Laserstrahl im erfindungsgemäßen Verfahren auf einer Oberfläche zur Bearbeitung der Oberfläche zurücklegen kann. Es wird dazu ein Laserstrahl mittels eines Laserscanners über die Oberfläche geführt. Die Oberfläche wird mittels einer Bewegungsmechanik in zumindest einem Repositionierungsvorgang gegenüber dem Laserscanner entlang eines vorgegebenen Verlaufs verschoben, wobei im gezeigten Beispiel der Verlauf ein gerader Pfad parallel zur Y-Achse ist. Von der Bewegungsmechanik wird dabei ein Positionierungssignal an den Laserscanner übertragen, das eine aktuelle Position der Oberfläche gegenüber dem Laserscanner anzeigt. Das Positionssignal zeigt also im gezeigten Beispiel den aktuellen Wert y an. Das Positionssignal ist dabei ein einzelnes Signal, das den Fortschritt des Verlaufs anzeigt, entlang dem die Oberfläche gegenüber dem Laserscanner verschoben wird. Wird die Oberfläche zusätzlich oder ausschließlich gegenüber dem Laserscanner gedreht, so kann das Positionssignal zusätzlich oder ausschließlich eine Orientierung anzeigen.

Im in Figur 1 gezeigten Beispiel liegt die zu bearbeitende Oberfläche in der X,Y-Ebene, die der Figurenebene entspricht. Die Oberfläche wird durch die Bewegungsmechanik in Y-Richtung verschoben. Dabei startet der Verlauf der Verschiebung bei y_{S} und endet bei y_{E}. Der Laserscanner fährt die Wegabschnitte parallel zur X-Achse ab. In den Abschnitten parallel zur Y-Achse ist der Laserscanner ausgeschaltet. Im Einzelfall erfolgt die Bearbeitung wie folgt. Der Laserscanner wird zu Beginn mit seinem Bearbeitungsnullpunkt bei der Mitte zwischen x₁ und x₂ sowie y_{S} positioniert. Er lenkt dann den Laserstrahl ausgehend von der Position x₁,y₁ zur Position x₂,y₁. Darauffolgend lenk er den Laserstrahl in der von unten gesehen zweiten horizontalen Linie und ausschließend in der dritten horizontalen Linie bis zum eingezeichneten Bearbeitungsnullpunkt 1 ab. Erreicht der Strahl den Bearbeitungsnullpunkt 1, so beginnt die Bewegungsmechanik, die Oberfläche in Richtung der y-Richtung zu bewegen. Während die Oberfläche entlang des Verlaufs 3 bewegt wird, fährt der Laserscanner nacheinander von unten nach oben die horizontalen Linien 6a, 6b, 6c ab.

Der Laserscanner scannt dabei mit einer solchen Geschwindigkeit, dass er das Ende des jeweiligen horizontalen Wegabschnitts 6a, 6b, 6c erreicht, bevor die Oberfläche bis zur y-Koordinate des darüberliegenden horizontalen Wegabschnitts 6a, 6b, 6c verschoben wird. Erreicht der Laserstrahl das Ende des Wegabschnitts 6a, 6b, 6c so wird er jeweils abgeschaltet. Erreicht nun die Oberfläche einen der Trigger-Punkte 5a, 5b, 5c, so wird der Laser wieder eingeschaltet und entlang des nächsten horizontalen Wegabschnitts 6a, 6b, 6c geführt. Erreicht der Laserscanner schließlich den Punkt 4 bei der y-Koordinate y_{E} in der Mitte zwischen x₁ und x₂, wird die Verschiebung der Oberfläche durch die Bewegungsmechanik gestoppt. Der Laserscanner wird dann noch bei gestoppter Mechanik entlang der horizontalen Wegabschnitte zwischen y_{E} und y₂ geführt.

Durch das Einfügen der Trigger-Punkte 5a, 5b, 5c, die das Wiederaufnehmen der Bearbeitung durch den Laserstrahl triggern, wird sichergestellt, dass der Laserstrahl stets an der richtigen Position bearbeitet.

Die Verschiebung der Oberfläche entlang des Verlaufs 3 wird durch ein Positionssignal angezeigt, dass beispielsweise ein Inkrement sein kann. Es werden dann ausgewählte Inkremente als die Trigger-Punkte 5a, 5b, 5c festgelegt. Der Laserscanner kann immer dann mit der Bearbeitung fortfahren, wenn ein als Trigger-Punkt definiertes Inkrement erreicht wird.

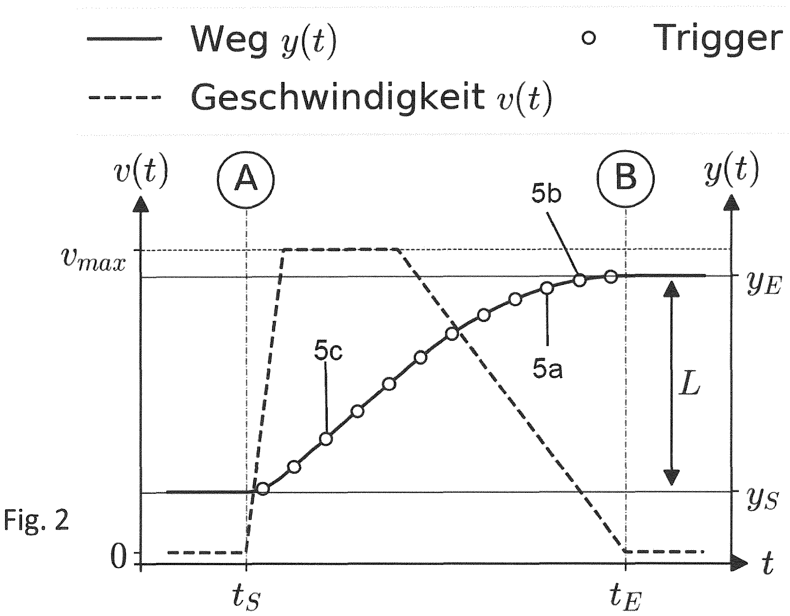

Figur 2 zeigt einen Zeitverlauf einer beispielshaften Ausführungsform des erfindungsgemäßen Verfahrens. Dabei ist auf der horizontalen Achse die Zeit aufgetragen und auf der vertikalen Achse zum einen die Geschwindigkeit der Bewegung der Oberfläche über den Laserscanner mittels der Bewegungsmechanik (links) und zum anderen die y-Position der Mechanik bei der Verschiebung entlang des Verlaufs 3 wie in Figur 1 gezeigt (rechts). Die Geschwindigkeit ist hierbei die aus den geraden Abschnitten zusammengesetzte Kurve. Es ist zu erkennen, dass zum Zeitpunkt t_{S} die Bewegung mit einer großen Beschleunigung gestartet wird, dann für eine Zeit tₘ konstant gehalten wird und anschließend in einem Zeitabschnitt t_{b} bis zur Zeit tₑ entschleunigt wird. Die gekrümmte Kurve stellt den Ortsverlauf der Oberfläche entlang des Verlaufs 3 zwischen dem Anfangsverlaufs y_{S} und dem Ende des Verlaufs y_{E} dar. Bestimmte der Orte 5a, 5b, 5c sind als Punkte eingezeichnet. Dies sind die in Figur 1 gezeigten Trigger-Punkte 5b. Aufgrund der Entschleunigung im Bereich t_{d} liegen diese Punkte 5a, 5b, 5c gegen Ende des Verlaufs 3 in y-Richtung näher beinander.

Beispielhaft kann das Verfahren der Erfindung auch wie folgt ausgeführt werden:
Das Beispiel sieht die Übertragung eines einzelnen Positionswertes vor, wobei die Berechnung der notwendigen Transformation auf die Steuerung des Laserscanners und auf die der mechanischen Achsen verteilt wird. Dazu wird die kinematische Transformation auf der Maschinensteuerung aktiviert (i.d.R. besitzt jede Steuerung eine solche Funktion für 5-Achs-Kinematiken). Das sorgt dafür, dass der Bearbeitungsnullpunkt (TCP = Tool Center Point, gleichzeitig Nullpunkt des Laserscanners) entlang einer Geraden im WKS geführt wird (d.h. bei einer 5-Achs-Maschine, dass ein Ausgleich der durch die Drehbewegung induzierte Verschiebung durch die Linearachsen durchgeführt wird.

Bei dem übertragenen Positionssignal soll es sich hierbei um die aktuelle Position entlang des Pfades (der Geraden im WKS) zwischen zwei Verfahrpositionen/TCPs (A → B) handeln - ein pfadsynchroner Positionswert also. Wenn an die Steuerung des Laserscanner vor der Bewegung Position A und B übertragen wird und während der Bewegung der pfadsynchrone Positionswert übertragen wird, kann die Steuerung des Laserscanners über lineare Interpolation die aktuelle Position (TCP) schließen.

Als Beispiel könnte der Positionswert in Form eines Encoder-Signals übertragen werden. Ein Encoder ist wie ein Wegzähler zu verstehen, der in einer definierten Auflösung (Abstand zwischen zwei Schritten) die Anzahl der Inkremente zählt. Wenn beispielsweise bekannt ist, dass bei der Bewegung von A nach B 10000 Schritte gezählt werden müssten und der aktuelle an die Scannersteuerung übertragene Encoder-Wert bei 5000 Schritten liegt, so kann die Steuerung des Laserscanners sich berechnen, dass sich die Position (TCP) genau in der Mitte zwischen A und B befindet.

Der Vorteil dieses Vorgehens ist, dass sich die Synthese eines einzelnen pfadsynchronen Positionswerts skalierbar auf mehrere Achsen ist, ohne dass zusäztliche Positionswerte übertragen werden müssen. Des Weiteren unterstützen viele Steuerungen von Maschinen eine kinematische Transformation, so dass die Transformation in WKS-Koordinaten von dieser übernommen werden kann.

Wie oben beschrieben, kann die Steuerung aufgrund des übertragenen Positionswertes auf die aktuelle Position (TCP) schließen. Durch gezielte Unterbrechungs-/Warte-Punkte im Programm auf der Steuerung des Laserscanners, in denen der Laserscanner auf einen definierten Positionswert wartet (der Laser sollte natürlich dabei ausgeschaltet sein), kann eine Synchronisierung zwischen beiden Systemen erreicht werden. Z.b. kann bei einer linienförmigen Bearbeitung der Start der Bearbeitung jeder Einzellinie durch das Erreichen eines definierten Positionswerts getriggert werden.

Die Nutzung von den oben beschriebenen Trigger-Punkten ist hierbei auch vorteilhaft, damit beide Systeme nicht zu stark auseinanderlaufen. Damit kann z.B. verhindert werden, dass die Größe des Scanfeldes (vom Laserscanner erreichbarer Arbeitsraum) überschritten wird oder die Orientierung sich zu stark verändert, so dass der Winkel zwischen Bauteiloberfläche und Laserstrahlrichtung zu groß wird bzw. die Zugänglichkeit nicht mehr gewährleistet ist.

## Patentansprüche

1. Verfahren zur Bearbeitung einer Oberfläche,
wobei ein Laserstrahl mittels eines Laserscanners über die Oberfläche geführt wird,
und wobei die Oberfläche mittels einer Bewegungsmechanik in zumindest einem Repositionierungsvorgang gegenüber dem Laserscanner entlang eines vorgegebenen Verlaufs (3) verschoben und/oder gedreht wird,
**dadurch gekennzeichnet, dass** von der Bewegungsmechanik ein Positionssignal an den Laserscanner übertragen wird,
und, dass das Positionssignal eine aktuelle Position und/oder Orientierung der Oberfläche gegenüber dem Laserscanner anzeigt,
und, dass der Laserscanner in Abhängigkeit vom Positionssignal gesteuert wird, und
wobei das Positionssignal ein einzelnes Signal ist, das den Fortschritt des Verlaufs (3) anzeigt, entlang dem die Oberfläche gegenüber dem Laserscanner verschoben und/oder gedreht wird.

2. Verfahren nach einem der vorhergehenden Ansprüche,
wobei das Positionssignal ein einzelnes Encodersignal ist, das Inkremente des Verlaufs (3) zählt, entlang dem die Oberfläche mittels der Bewegungsmechanik verschoben und/oder gedreht wird.

3. Verfahren nach einem der vorhergehenden Ansprüche,
wobei der Verlauf durch eine Mehrzahl von Trigger-Punkten (5a-c,6a-c) unterteilt ist, wobei
der Laserstrahl über einen Teilbereich der Oberfläche geführt wird, während die Oberfläche gegenüber dem Laserscanner durch die Bewegungsmechanik zwischen zwei Aktuellen der Trigger-Punkte (5a-c,6a-c) entlang des vorgegebenen Verlaufs (3) bewegt wird,
der Laserscanner die Bearbeitung pausiert bis das Positionssignal anzeigt, dass die Oberfläche einen Fortgeschritteneren der zwei aktuellen Trigger-Punkte (5a-c,6a-c) erreicht hat, und bei Erreichen des Fortgeschritteneren der zwei aktuellen Trigger-Punkte (5a-c,6a-c) die Bearbeitung in einem nächsten Teilbereich der Oberfläche fortsetzt.

4. Verfahren nach dem vorhergehenden Anspruch,
wobei der Laserscanner den Laserstrahl so führt, dass dieser die Bewegung der Bewegungsmechanik zwischen Zweien der Trigger-Punkte (5a-c,6a-c) jeweils in Richtung des Verlaufs (3) so ausgleicht, dass der Laserstrahl einen vorgegebenen Weg auf der Oberfläche abfährt,
wobei ein Betrag des Ausgleichs in Richtung des Verlaufs dadurch bestimmt wird, dass die Position der Oberfläche gegenüber dem Laserscanner zwischen den Zweien der Trigger-Punkte (5a-c,6a-c) interpoliert wird und der Betrag des Ausgleichs zu einem gegebenen Zeitpunkt jener Weg ist, den die Oberfläche gegenüber dem Laserscanner gemäß der Interpolation ausgehend vom Vorhergehenden der Zweien der Trigger-Punkte (5a-c,6a-c) zu diesem Zeitpunkt zurückgelegt hat.

5. Verfahren nach einem der vorhergehenden Ansprüche,
wobei der Verlauf (3) der Position des Laserscanners gegenüber der Oberfläche eine Linie parallel zur Oberfläche beschreibt.

6. Verfahren nach einem der vorhergehenden Ansprüche, wobei im Repositionierungsvorgang die Oberfläche entlang einer Hauptbearbeitungsrichtung bewegt wird, welches die längste jener Richtungen ist, in der die Oberfläche zur vollständigen Bearbeitung bewegt wird.

7. Verfahren nach einem der vorhergehenden Ansprüche,
wobei das Positionssignal von einer kinematischen Transformation der Bewegungsmechanik berechnet wird und von dieser an den Laserscanner ausgegeben wird.

8. Verfahren nach einem der vorhergehenden Ansprüche,
wobei der Laserscanner den Laserstrahl in Abhängigkeit vom Positionssignal steuert.

9. Verfahren nach einem der vorhergehenden Ansprüche,
wobei der Verlauf (3) mit einem Anfang des Verlaufs und einem Ende des Verlaufs (3) vorgegeben wird,
der Verlauf (3) in eine vorgegebene Anzahl an Inkrementen unterteilt wird,
einige der Inkremente als Trigger-Punkte (5a-c,6a-c) definiert werden, für jeden Abschnitt des Verlaufs (3) zwischen zwei zeitlich benachbarten der Trigger-Punkte (5a-c,6a-c) ein Teilweg des Laserstahls definiert wird, den der Laserstrahl abfährt, während die Oberfläche zwischen diesen zeitlich Benachbarten der Trigger-Punkten (5a-c,6a-c) bewegt wird,
und der Laserscanner den Laserstrahl mit einer solchen Geschwindigkeit über die Oberfläche führt, dass der Laserstrahl den jeweiligen Teilweg vollständig abgefahren hat, bevor die Oberfläche den Fortgeschritteneren der Trigger-Punkte (5a-c,6a-c) erreicht hat, die den entsprechenden Abschnitt des Verlaufs begrenzen,
wobei der Laserscanner den Laserstrahl anhält, wenn dieser das Ende des entsprechenden Teilwegs erreicht hat, und
den Scanvorgang fortsetzt, wenn die Oberfläche gegenüber dem Laserscanner den Fortgeschritteneren der Trigger-Punkte (5a-c,6a-c), die den entsprechenden Abschnitt des Verlaufs (3) begrenzen, erreicht hat.

10. Laserscannvorrichtung, aufweisend einen Laserscanner, eine Bewegungsmechanik, und eine Steuerung, **dadurch gekennzeichnet, dass**
die Steuerung folgende Schritte eines Verfahrens durchführen wird:
ein Laserstrahl wird mittels eines Laserscanners über eine Oberfläche geführt,
die Oberfläche wird mittels einer Bewegungsmechanik in zumindest einem Repositionierungsvorgang gegenüber dem Laserscanner entlang eines vorgegebenen Verlaufs (3) verschoben und/oder gedreht,
von der Bewegungsmechanik wird ein Positionssignal an den Laserscanner übertragen,
das Positionssignal zeigt eine aktuelle Position und/oder Orientierung der Oberfläche gegenüber dem Laserscanner an,
der Laserscanner wird in Abhängigkeit vom Positionssignal gesteuert, und
wobei das Positionssignal ein einzelnes Signal ist, das den Fortschritt des Verlaufs (3) anzeigt, entlang dem die Oberfläche gegenüber dem Laserscanner verschoben und/oder gedreht wird.

## Claims

1. Method for machining a surface,
wherein a laser beam is guided over the surface by means of a laser scanner,
and wherein the surface is displaced and/or rotated relative to the laser scanner along a predefined route (3) in at least one repositioning process by means of movement mechanism,
**characterized in that** a position signal is transmitted to the laser scanner by the movement mechanism,
and **in that** the position signal indicates a current position and/or orientation of the surface relative to the laser scanner,
and **in that** the laser scanner is controlled depending on the position signal, and
wherein the position signal is an individual signal which indicates the advancement of the route (3) along which the surface is displaced and/or rotated relative to the laser scanner.

2. The method according to one of the preceding claims,
wherein the position signal is an individual encoder signal which counts increments of the route (3) along which the surface is displaced and/or rotated by means of the movement mechanism.

3. The method according to one of the preceding claims,
wherein the route is divided by a plurality of trigger points (5a-c, 6a-c), wherein
the laser beam is guided over a partial region of the surface whilst the surface is moved relative to the laser scanner by the movement mechanism between two current trigger points (5a-c, 6a-c) along the predefined route (3),
the laser scanner pauses the machining until the position signal indicates that the surface has reached a more advanced of the two current trigger points (5a-c, 6a-c), and continues the machining in a next partial region of the surface when the more advanced of the two current trigger points (5a-c, 6a-c) is reached.

4. The method according to the preceding claim,
wherein the laser scanner guides the laser beam so that this compensates for the movement of the movement mechanism between two of the trigger points (5a-c, 6a-c) in the direction of the route (3) such that the laser beam travels a predefined path on the surface,
wherein an amount of the compensation in the direction of the route is determined in that the position of the surface relative to the laser scanner between the two trigger points (5a-c, 6a-c) is interpolated and the amount of the compensation at a given moment in time is the path that the surface has covered at this moment in time relative to the laser scanner according to the interpolation starting from the preceding one of the two trigger points (5a-c, 6a-c).

5. The method according to one of the preceding claims, wherein the route (3) of the position of the laser scanner relative to the surface describes a line parallel to the surface.

6. The method according to one of the preceding claims, wherein in the repositioning process the surface is moved along a main machining direction which is the longest of those directions in which the surface is moved for complete machining.

7. The method according to one of the preceding claims,
wherein the position signal is calculated by a kinematic transformation of the movement mechanism and is output therefrom to the laser scanner.

8. The method according to one of the preceding claims,
wherein the laser scanner controls the laser beam depending on the position signal.

9. The method according to one of the preceding claims,
wherein the route (3) is predefined with a start of the route and an end of the route (3),
the route (3) is divided into a predefined number of increments,
some of the increments are defined as trigger points (5a-c, 6a-c), a partial path of the laser beam is defined for each portion of the route (3) between two temporally adjacent trigger points (5a-c, 6a-c), which partial path is traveled by the laser beam whilst the surface is moved between these temporally adjacent trigger points (5a-c, 6a-c),
and the laser scanner guides the laser beam over the surface at such a speed that the laser beam has fully traveled the corresponding partial path before the surface has reached the more advanced of the trigger points (5a-c, 6a-c) which delimit the corresponding portion of the route,
wherein the laser scanner stops the laser beam when this has reached the end of the corresponding partial path and
continues the scanning process when the surface opposite the laser scanner has reached the more advanced of the trigger points (5a-c, 6a-c) which delimit the corresponding portion of the route (3).

10. A laser scanning device, comprising a laser scanner, a movement mechanism, and a controller,
**characterized in that** the controller performs the following steps of a method:
a laser beam is guided by means of a laser scanner above a surface,
the surface is displaced and/or rotated relative to the laser scanner along a predefined route (3) by means of a movement mechanism in at least one repositioning process, a position signal is transmitted from the movement mechanism to the laser scanner,
the position signal indicates a current position and/or orientation of the surface relative to the laser scanner,
the laser scanner is controlled depending on the position signal, and
wherein the position signal is an individual signal which indicates the advancement of the route (3) along which the surface is displaced and/or rotated relative to the laser scanner.

## Revendications

1. Procédé pour l'usinage d'une surface,
dans lequel un faisceau laser est guidé au-dessus de la surface au moyen d'un scanner laser,
et dans lequel la surface est décalée et/ou amenée en rotation le long d'un tracé (3) prédéfini par rapport au scanner laser au moyen d'un mécanisme de déplacement dans au moins un processus de repositionnement,
**caractérisé en ce que** un signal de position est transmis par le mécanisme de déplacement au scanner laser,
et que le signal de position indique une position et/ou orientation actuelle de la surface par rapport au scanner laser,
et que le scanner laser est commandé en fonction du signal de position, et
dans lequel le signal de position est un signal individuel, qui indique l'avancée du tracé (3) le long duquel la surface est décalée et/ou amenée en rotation par rapport au scanner laser.

2. Procédé selon l'une quelconque des revendications précédentes,
dans lequel le signal de position est un signal de codeur individuel, qui indique les incréments du tracé (3) le long duquel la surface est décalée et/ou amenée en rotation au moyen du mécanisme de déplacement.

3. Procédé selon l'une quelconque des revendications précédentes,
dans lequel le tracé est subdivisé par une pluralité de points de déclenchement (5a-c,6a-c), dans lequel
le faisceau laser est guidé au-dessus d'une zone partielle de la surface, pendant que la surface est déplacée par rapport au scanner laser par le mécanisme de déplacement entre deux actuels des points de déclenchement (5a-c,6a-c) le long du tracé (3) prédéfini,
le scanner laser suspend l'usinage jusqu'à ce que le signal de position indique que la surface a atteint un plus avancé des deux points de déclenchement (5a-c,6a-c) actuels, et lors de l'atteinte du plus avancé des deux points de déclenchement (5a-c,6a-c) actuels, poursuit l'usinage dans une zone partielle suivante de la surface.

4. Procédé selon la revendication précédente,
dans lequel le scanner laser guide le faisceau laser, de sorte que celui-ci équilibre le mouvement du mécanisme de déplacement entre deux des points de déclenchement (5a-c,6a-c) respectivement en direction du tracé (3), de sorte que le faisceau laser parcourt un trajet prédéfini sur la surface,
dans lequel une valeur de l'équilibrage en direction du tracé est déterminée du fait que la position de la surface par rapport au scanner laser entre les deux des points de déclenchement (5a-c,6a-c) est interpolée et la valeur de l'équilibrage à un moment donné est le trajet que la surface a parcouru par rapport au scanner laser conformément à l'interpolation à partir du précédent des deux des points de déclenchement (5a-c,6a-c) jusqu'à ce moment.

5. Procédé selon l'une quelconque des revendications précédentes, dans lequel le tracé (3) de la position du scanner laser par rapport à la surface décrit une ligne parallèle à la surface.

6. Procédé selon l'une quelconque des revendications précédentes, dans lequel dans le processus de repositionnement la surface est déplacée le long d'une direction d'usinage principale, laquelle est la plus longue des directions dans laquelle la surface est déplacée pour l'usinage complet.

7. Procédé selon l'une quelconque des revendications précédentes,
dans lequel le signal de position est calculé par une transformation cinématique du mécanisme de déplacement et délivré par celui-ci au scanner laser.

8. Procédé selon l'une quelconque des revendications précédentes,
dans lequel le scanner laser commande le faisceau laser en fonction du signal de position.

9. Procédé selon l'une quelconque des revendications précédentes,
dans lequel le tracé (3) est prédéfini avec un début du tracé et une fin du tracé (3),
le tracé (3) est subdivisé en un nombre prédéfini d'incréments,
certains des incréments sont définis comme des points de déclenchement (5a-c,6a-c), pour chaque tronçon du tracé (3) entre deux voisins dans le temps des points de déclenchement (5a-c,6a-c), un trajet partiel du faisceau laser que le faisceau laser parcourt pendant que la surface est déplacée entre ces voisins dans le temps des points de déclenchement (5a-c,6a-c) est défini,
et le scanner laser guide le faisceau laser au-dessus de la surface à une vitesse telle que le faisceau laser a entièrement parcouru le trajet partiel respectif, avant que la surface n'ait atteint le plus avancé des points de déclenchement (5a-c,6a-c) qui délimitent le tronçon correspondant du tracé,
dans lequel le scanner laser arrête le faisceau laser lorsque celui-ci a atteint la fin du trajet partiel correspondant, et
poursuit le processus de balayage lorsque la surface par rapport au scanner laser a atteint le plus avancé des points de déclenchement (5a-c,6a-c) qui délimitent le tronçon correspondant du tracé (3).

10. Dispositif de balayage laser, présentant un scanner laser, un mécanisme de déplacement, et une commande,
**caractérisé en ce que** la commande réalisera les étapes suivantes d'un procédé :
un faisceau laser est guidé au-dessus d'une surface au moyen d'un scanner laser,
la surface est décalée et/ou amenée en rotation le long d'un tracé (3) prédéfini par rapport au scanner laser au moyen d'un mécanisme de déplacement dans au moins un processus de repositionnement, un signal de position est transmis par le mécanisme de déplacement au scanner laser,
le signal de position indique une position et/ou orientation actuelle de la surface par rapport au scanner laser,
le scanner laser est commandé en fonction du signal de position, et
dans lequel le signal de position est un signal individuel, qui indique l'avancée du tracé (3) le long duquel la surface est décalée et/ou amenée en rotation par rapport au scanner laser.
